# EUROPEAN PATENT SPECIFICATION

(11) **EP 1 724 857 B1**
(45) Date of publication and mention of the grant of the patent: **23.07.2008**
(21) Application number: 06113981.2
(22) Date of filing: 16.05.2006
(51) Int. Cl.: H01M 2/18, H01M 2/16

(54) **Jelly-roll type electrode assembly and lithium secondary battery with the same**
ewickelte Elektroden Vorrichtung und eine Sekundärbatterie die dieselbe beinhaltet
Dispositif d'assemblage du type "jelly roll" à électrodes enroulées et pile secondaire le comprenant

(30) Priority: 18.05.2005 KR 2005041419
(43) Date of publication of application: 22.11.2006
(73) Proprietor: Samsung SDI Co., Ltd., Suwon-si Gyeonggi-do (KR)
(72) Inventor: SONG, Minho, Gyeonggi-do (KR)
(74) Representative: Hengelhaupt, Jürgen

(56) References cited:
- PATENT ABSTRACTS OF JAPAN vol. 1999, no. 04, 30 April 1999 (1999-04-30) -& JP 11 026011 A (HITACHI MAXELL LTD), 29 January 1999 (1999-01-29)
- PATENT ABSTRACTS OF JAPAN vol. 017, no. 460 (E-1419), 23 August 1993 (1993-08-23) -& JP 05 109435 A (NIPPON TELEGR & TELEPH CORP <NTT>), 30 April 1993 (1993-04-30)

## Description

### BACKGROUND OF THE INVENTION

### 1. Field of the Invention

Aspects of the present invention relate to a jelly-roll type electrode assembly and a lithium secondary battery with the same. More particularly, aspects of the present invention relate to a jelly-roll type electrode assembly and a lithium secondary battery with the same, capable of improving reliability and stability of the lithium secondary battery by protecting the lithium secondary battery from external impact applied thereto when a user drops the lithium secondary battery onto the ground.

### 2. Description of the Related Art

Recently, electric/electronic appliances having a compact size and light weight, such as cellular phones, notebook computers and camcorders, have been actively developed and produced. Such electric/electronic appliances are equipped with battery packs so that users can use the electric/electronic appliances in various places even if electric power sources are not separately provided for the electric/electronic appliances. The battery pack includes at least one bare cell capable of outputting an operational voltage having a predetermined level in order to operate portable electric/electronic appliances for a predetermined period of time.

Secondary batteries, which are rechargeable batteries, are currently employed in the battery packs due to their economical advantages. The secondary batteries include Ni-Cd batteries, Ni-MH batteries and Li secondary batteries, such as Li batteries or Li-ion batteries.

Among other advantages, the lithium secondary batteries have an operational voltage of about 3.6V, which is three times higher than that of Ni-Cd batteries or Ni-MH batteries used as power sources for the portable electronic appliances. In addition, the lithium secondary batteries have high energy density per unit weight, so the lithium secondary batteries are extensively used in the advanced electronic technology fields.

The lithium secondary battery uses lithium-based oxide as a positive electrode active material and carbon as a negative electrode active material. In general, the lithium secondary batteries are classified into liquid electrolyte batteries and polymer electrolyte batteries according to the type of the electrolytes used in them. The liquid electrolyte batteries are called "lithium ion batteries" and the polymer electrolyte batteries are called "lithium polymer batteries." In addition, the lithium secondary batteries can be fabricated with various shapes, such as cylinder type lithium secondary batteries, square type lithium secondary batteries, or pouch type lithium secondary batteries.

Typically, a lithium ion secondary battery includes an electrode assembly consisting of a positive electrode plate coated with a positive electrode active material, a negative electrode plate coated with a negative electrode active material and a separator interposed between the positive electrode plate and the negative electrode plate for preventing a short circuit while allowing the lithium ions to move exclusively, a case for receiving the electrode assembly therein, and an electrolyte contained in the case in order to enable lithium ions to move.

In such a lithium ion secondary battery, the positive electrode plate coated with the positive electrode active material and connected to a positive electrode tap is stacked with the negative electrode plate coated with the negative electrode active material and connected to a negative electrode tap and the separator is interposed therebetween. Then the positive electrode plate, the negative electrode plate and the separator are wound in the form of a jelly-roll, thereby forming the electrode assembly.

After that, the electrode assembly is accommodated in the case such that the electrode assembly can be prevented from separating from the case. Then, the electrolyte is injected into the case and then the case is sealed, thereby obtaining the lithium ion secondary battery.

However, the lithium ion secondary battery having the above structure may be very prone to damage from external impact applied thereto, such as, for example, when a user drops the lithium secondary battery onto the ground. In particular, an insulating case of the cap assembly may be tilted when the external impact is applied thereto, so that the insulating case may apply pressure to the electrode assembly. In this case, a short circuit may occur between the positive electrode plate and the negative electrode plate of the electrode assembly.

JP 11 026011 discloses a battery capable of preventing the occurrence of the exhaustion of an electrolyte and a short circuit by setting the width of a separator lager than the width of a positive and negative electrode. JP 05 109435 discloses a battery being modified to prevent a short circuit by setting the width of a separator lager than the width of an electrode.

However, reliability and stability of the lithium ion secondary battery still may be degraded due to external impact.

### SUMMARY OF THE INVENTION

According to the present invention, there is provided a jelly-roll type electrode assembly comprising: a first electrode plate; a second electrode plate; and a separator interposed between the first and second electrodes so as to insulate the first electrode plate from the second electrode plate, wherein the separator includes an upper section that protrudes by an upper protruding width from an upper portion of the first and second electrode plates and a lower section that protrudes by a lower protruding width from a lower portion of the first and second electrode plates and wherein the upper protruding width is greater than the lower protruding width. The jelly-roll type electrode assembly is capable of improving reliability and stability to the lithium secondary battery by protecting the lithium secondary battery from external impact applied thereto, such as, for example, when a user drops the lithium secondary battery onto the ground.

Preferably, the upper protruding width of the separator is in a range of 2 to 4% with respect to a total width (W) of the separator.

Preferably, the protruding width of the upper section of the separator is greater than the protruding width of the lower section of the separator by 0.3 to 1.0mm.

Preferably, the protruding width of the upper section of the separator is in a range of 1.0 to 2.0mm.

Preferably, the protruding width of the lower section of the separator is in a range of 1.0 to 2.0mm.

Preferably, the jelly-roll type electrode assembly further comprises a first electrode tap, which is attached to the first electrode plate and protrudes therefrom by a predetermined length, and a second electrode tap, which is attached to the second electrode plate and protrudes therefrom by a predetermined length, wherein an insulation tape is attached around predetermined portions of the first and second electrode taps so as to prevent a short circuit from occurring between the first and second electrode plates.

Preferably, the protruding width of the upper section of the separator is 1.3 to 2 times greater than the protruding width of the lower section of the separator.

Preferably, the length of the lower section of the separator is in a range of 2 to 3% with respect to the width (W) of the separator.

According to still another aspect of the present invention, there is provided a secondary battery comprising: a jelly-roll type electrode assembly including a first electrode plate, a second electrode plate, and a separator interposed between the first and second electrodes so as to insulate the first electrode plate from the second electrode plate, wherein the separator includes an upper section that protrudes by an upper protruding width from an upper portion of the first and second electrode plates and a lower section that protrudes by a lower protruding width from a lower portion of the first and second electrode plates and wherein the upper protruding width is greater than the lower protruding width; and a case for receiving the electrode assembly therein. The jelly-roll type electrode assembly may have the additional features of the above-mentioned preferred embodiments.

Preferably, the case may be selected from the group consisting of a cylinder type case, a square type case and a pouch type case.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1A is a plan view illustrating a developed state of a jelly-roll type electrode assembly according to one embodiment of the present invention;
FIG. 1B is a perspective view illustrating a jelly-roll type electrode assembly according to one embodiment of the present invention;
FIG. 1C is an enlarged view of the indicated portion of FIG. 1B.
FIG 2 is an exploded perspective view illustrating a square type lithium secondary battery having an electrode assembly according to one embodiment of the present invention;
FIG. 3 is an exploded perspective view illustrating a cylinder type lithium secondary battery having an electrode assembly according to one embodiment of the present invention; and
FIG. 4A is an exploded perspective view illustrating a pouch type lithium secondary battery having an electrode assembly according to one embodiment of the present invention.
FIG. 4B is an enlarged view of the indicated portion of FIG. 4A.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

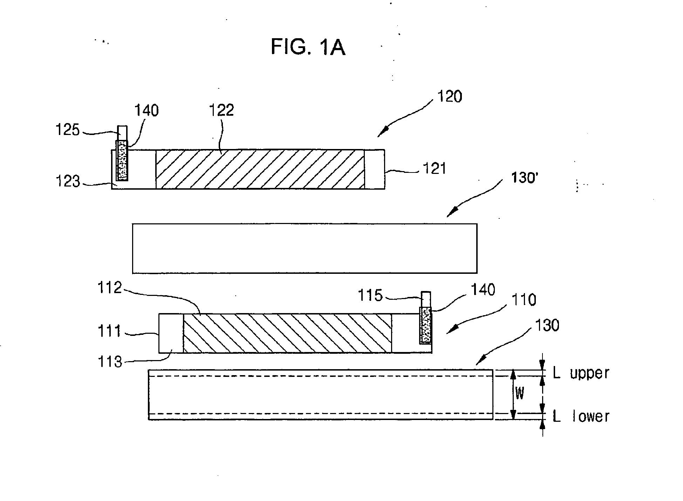

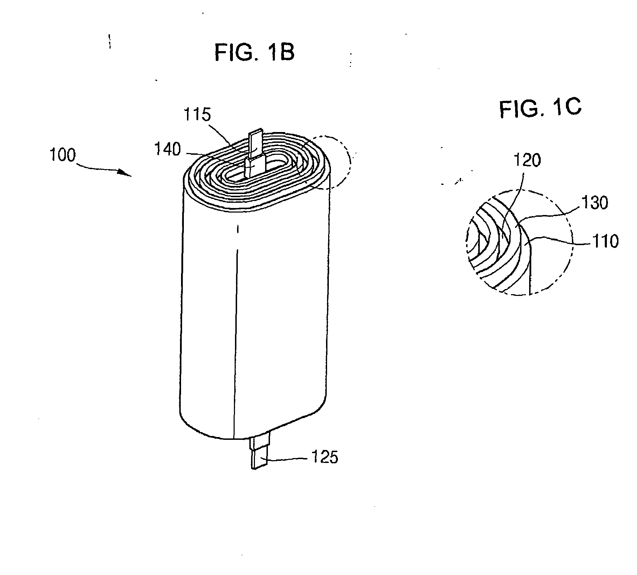

FIG. 1A is a plan view illustrating a developed state of a jelly-roll type electrode assembly according to one embodiment of the present invention, and FIG. 1B is a perspective view illustrating the jelly-roll type electrode assembly according to one embodiment of the present invention. FIG. 1C is an enlarged view of the indicated portion of FIG. 1B.

Referring to FIGS. 1A ,1B and 1C, the jelly-roll type electrode assembly 100 according to one embodiment of the present invention includes a first electrode plate 110 to which a first electrode tap 115 is attached, a second electrode plate 120 to which a second electrode tap 125 is attached, and separators 130 and 130'. The first electrode plate 110, the second electrode plate 120 and the separators 130 and 130' are prepared in the form of strips and stacked in the order of first electrode plate 110, the separator 130, the second electrode plate 120 and the separator 130'. After that, they are wound in the form of a jelly-roll, thereby forming the jelly-roll type electrode assembly 100.

In a jelly-roll type electrode assembly, a separator separates the inner portion of a first electrode plate from an outer portion of a second electrode plate and an inner portion of a second electrode plate from an outer portion of a first electrode plate. This separation may be accomplished by using a separator that is divided in two parts, such as the separators 130 and 130' shown in FIGs. 1A, 1B and 1C, wherein the separator 130 separates an inner-facing portion of the first electrode plate 110 from the outer-facing portion of the second electrode plate, and separator 130' separates an inner-facing portion of the second electrode plate 120 from the outer-facing portion of the first electrode plate 110. Alternatively, although it is not illustrated in figures, a single separator may wind back on itself at a center portion so that one part of the separator separates an inner-facing portion of the first electrode plate 110 from the outer-facing portion of the second electrode plate, and the other part separates an inner-facing portion of the second electrode plate 120 from the outer-facing portion of the first electrode plate 110. Further, although it is not illustrated in figures, it is possible to surround one of the first and second electrode plates 110 and 120 g with a single separator so that as the electrode assembly is wound in the form of a jelly-roll, the separator keeps the electrode plates from contacting each other. For the remainder of this description, the designation "separator 130" is used to refer to any separator disposed between a first electrode plate and a second electrode plate, regardless of whether the separator is in one continuous piece or one surrounding piece or is two pieces. In particular, as used for the remainder of this description, the term "separator 130" may refer to separator 130 or separator 130' or both.

In addition, insulating tapes 140 are attached around predetermined portions of the first and second electrode taps 115 and 125, which protrude out of the electrode assembly 100, in order to prevent the short circuit from occurring between the first and second electrode plates 110 and 120.

One of the first and second electrode plates 110 and 120 may serve as a positive electrode plate and the other may serve as a negative electrode plate. For convenience of this discussion, the first electrode plate 110 is designated herein as the positive electrode plate and the second electrode plate 120 is designated herein as the negative electrode plate, and the following descriptions of active materials and collector materials are based on this designation, but this designation is arbitrary. It would also be possible for the first electrode plate 110 to be the negative electrode plate and the second electrode plate 120 to be the positive electrode.

The first electrode plate 110 includes a first electrode collector 111 and a first active material layer 112 coated on at least one surface of the first electrode collector 111, and the second electrode plate 120 includes a second electrode collector 121 and a second active material layer 122 coated on at least one surface of the second electrode collector 121. In addition, first and second uncoated portions 113 and 123, in which the first and second active material layers 112 and 122 are not coated, are formed at both side end portions of the first and second electrode collectors 111 and 121 of the first and second electrode plates 110 and 120. The first electrode tap 115 is electrically attached to a predetermined portion of one of the first uncoated portions 113 and the second electrode tap 125 is electrically attached to a predetermined portion of one of the second uncoated portions 123.

In addition, the first and second active material layers 112 and 122 start to be wound after the first and second electrode plates 110 and 120 have been wound once. That is, the first and second active material layers 112 and 122 start to be wound from boundary lines between the first and second uncoated portions 113 and 123 and the first and second active material layers 112 and 122 after the first and second electrode plates 110 and 120 have been wound once.

The electrode collector of the positive electrode plate, that is, the first electrode collector 111 of the first electrode plate 110 as designated herein, is made of a thin metal plate having superior conductivity, such as, for example, aluminum foil.

The electrode collector of the negative electrode plate, that is, the second electrode collector 121 of the second electrode plate 120 as designated herein, is made of a conductive metal plate, such as, for example, copper or nickel foil.

The first active material layer 112 coated on the first electrode collector 111 may comprise a positive electrode active material, a conductive agent and an adhesive. A chalcogenide compound may be used as the positive electrode active material. For instance, composite metal oxide, such as LiCoO₂, LiMn₂O₄, LiNiO₂, LiNi₁₋ₓCoₓO₂, (0<x<1), or LiMn₂O₄, may be used as the positive electrode active material. However, the positive electrode active material is not limited to these materials.

In addition, the second active material layer 122 coated on the second electrode collector 121 may comprise a negative electrode active material, a conductive agent and an adhesive. The negative electrode active material may be selected from the group consisting of carbonic materials, Si, Sn, tin oxide, composite tin alloys, transition metal oxides, lithium metal nitrides, and lithium metal oxides. However, the negative electrode active material is not limited to these materials.

The separator 130 prevents a short circuit from occurring between the first and second electrode plates 110 and 120 while allowing electric charge carriers of the lithium secondary battery (such as, for example, lithium ions) to pass though exclusively. The separator 130 may be selected from the group consisting of polyethylene, polypropylene, and copolymer of polyethylene and polypropylene. However, the separator is not limited to these materials. According to an aspect of the present invention, the total width (W) of the separator 130 is larger than the width of the first electrode 110 or the second electrode 120. The separator 130 protrudes in upward and downward directions from the first and second electrode plates 110 and 120 when the separator 130 is wound together with the first and second electrode plates 110 and 120, thereby preventing short circuits from occurring between the first and second electrode plates 110 and 120.

The protruding width (Lᵤₚₚₑᵣ) of an upper section of the separator 130, that is, the distance by which the separator 130 protrudes upward from the first and second electrode plates 110 and 120, is greater than a protruding width (L_{lower}) of a lower section of the separator 130, which protrudes downward from the first and second electrode plates 110 and 120. For example, the protruding width (Lᵤₚₚₑᵣ) of the upper section of the separator 130 may be greater than the protruding width (L_{lower}) of the lower section of the separator 130 by 0.3 to 1.0mm. In other words, for example, the protruding width (Lᵤₚₚₑᵣ) of the upper section of the separator 130 may be 1.3 to 2 times greater than the protruding width (L_{lower}) of the lower section of the separator 130.

As an additional example, the protruding width (Lᵤₚₚₑᵣ) of the upper section of the separator 130 may be within a range of 1.0 to 2.0mm. For example, the protruding width (Lᵤₚₚₑᵣ) of the upper section of the separator 130 may be within a range of 2 to 4% with respect to the total width (W) of the separator 130.

Further, for example the protruding width (L_{lower}) of the lower section of the separator 130 is within a range of 1.0 to 2.0mm. That is, for example, the protruding width (L_{lower}) of the lower section of the separator 130 may be in a range of 2 to 3% with respect to the total width (W) of the separator 130.

As used herein, the terms "upward," "downward," "upper," and "lower," when used with respect to the electrode assembly 100, refer to the orientation that the electrode assembly 100 will have when installed in a battery case. In particular, the term "upper", such as when referring to the upper section of the separator 130 of the electrode assembly 100, refers the portion of the separator that is closest to the cap or opening of the battery case, and the term "lower," such as when referring to the lower section of the separator 130 of the electrode case, refers to the portion of the separator that is closest to the bottom or closed end of the battery case. However, it is to be understood that the electrode assembly 100 can be turned in any direction before it is installed in a battery case, and once the electrode assembly 100 is installed in a battery case, the battery can be turned in any direction. The term "width" refers to a distance in the direction between the cap or opening and the bottom or closed end of the battery case. In other words, the width of the separator, first electrode plate and second electrode plate is a distance in the non-winding direction of the separator, first electrode plate and second electrode plate. According to an aspect of the present invention, the separator has a greater width than the first electrode plate and second electrode plate and the term "protruding width" refers to the distances by which the separator protrudes from the upper or lower portion of the first and second electrode plates. Since the first and second electrode plates typically have the same width and overlap each other exactly in the width direction, it is not necessary to separately specify a protruding width of the separator from the first electrode plate and from the second electrode plate. However, in the rare event that the first electrode plate and the second electrode plate do not have the same width or do not exactly overlap in the width direction, the term "protruding width" refers to the distance that the separator protrudes from whichever electrode plate extends the farthest in the width direction.

Alternatively, the features described above with respect to the electrode assembly 100 may be described as follows: The separator 130 protrudes in first and second directions from the first and second portions of the first and second electrode plates 110 and 120 when the separator 130 is wound together with the first and second electrode plates 110 and 120, thereby preventing the short circuit from occurring between the first and second electrode plates 110 and 120. A protruding width of a first section of the separator 130, which protrudes in a first direction from the first portion of the first and second electrode plates 110 and 120, may be different from a protruding width of a second section of the separator 130, which protrudes in a second direction from the second portion of the first and second electrode plates 110 and 120. Preferably, but not necessarily, the protruding width of the first section of the separator 130 is larger than the protruding width of the second section of the separator 130. For example, the protruding width of the first section of the separator 130 may be larger than the protruding width of the second section of the separator 130 by 0.3 to 1.0mm. In other words, for example, the protruding width of the first section of the separator 130 may be 1.3 to 2 times larger than the protruding width of the second section of the separator 130.

As a further example, the protruding width of the first section of the separator 130 may be within a range of 1.0 to 2.0mm. As a further example, the width of the first section of the separator 130 may be within a range of 2 to 4% with respect to the total width (W) of the separator 130.

As a further example, the protruding width of the second section of the separator 130 may be within a range of 1.0 to 2.0mm. As a further example, the protruding length of the second section of the separator 130 may be in a range of 2 to 3% with respect to the width (W) of the separator 130.

When an external impact is applied to a secondary battery that includes the electrode assembly 100 accommodated in a case (not shown) during a drop test for the secondary battery, elements of the cap assembly installed on the upper portion of the electrode assembly 100 will rarely collide with the first and second electrode plates 110 and 120 of the electrode assembly 100, because these are protected by the upper protruding portion of the separator. Therefore, reliability and stability of the secondary battery is improved. In other words, since the protruding width of the upper section of the separator 130, which protrudes upward from the electrode assembly 100, is larger than the protruding width of the lower section of the separator 130, which protrudes downward from the electrode assembly 100, the cap assembly can be prevented from being damaged and a short circuit between the first and second electrode plates 110 and 120 of the electrode assembly 100 may be avoided even if an external impact is applied to the secondary battery.

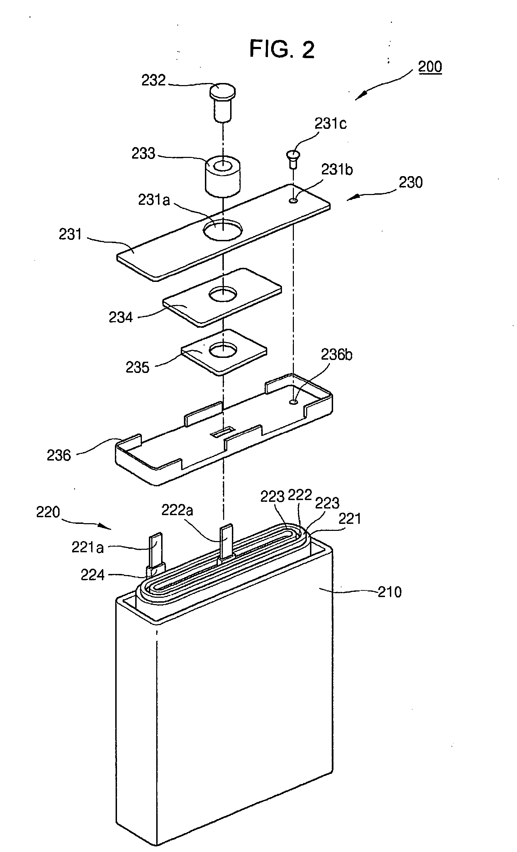

FIG. 2 is an exploded perspective view illustrating a square or rectangular type lithium secondary battery including the electrode assembly according to one embodiment of the present invention.

Referring to FIG. 2, the lithium secondary battery 200 according to one embodiment of the present invention includes a case 210 in the form of a square can, a jelly-roll type electrode assembly 220 accommodated in the case 210, and a cap assembly 230 assembled with an upper end portion of the case 210.

The case 210 is a metallic can having a substantially square or rectangular shape, and serves as a terminal.

The electrode assembly 220 includes a first electrode plate 221 provided with either a first electrode tap 221a used as a positive electrode tap or a second electrode tap 222a used as a negative electrode tap (for instance, the first electrode tap 221a may be attached to the first electrode plate 221), a second electrode plate 222 provided with either the first electrode tap 221a or the second electrode tap 222a (for instance, the second electrode tap 222a may be attached to the second electrode plate 222), and a separator 223 interposed between the first and second electrode plates 221 and 222. The first electrode plate 221, the second electrode plate 222 and the separator 223 are wound together and accommodated in the case 210. The separator 223 protrudes in upward and downward directions from the first and second electrode plates 221 and 222 and the protruding width of the upper section of the separator 223, which protrudes upward from the first and second electrode plates 221 and 222, is different from the protruding width of the lower section of the separator 223, which protrudes downward from the first and second electrode plates 221 and 222. The protruding width of the upper section of the separator 223 may be larger than the protruding width of the lower section of the separator 223.

Insulating tapes 224 are attached around predetermined portions of the first and second electrode taps 221a and 222a, which protrude from the electrode assembly 220, in order to prevent the short circuit from occurring between the first and second electrode plates 221 and 222.

The cap assembly 230 includes a flat type cap plate 231 having a shape and a size corresponding to the shape and size of an opening of the case 210. The cap plate 231 is formed at the center thereof with a terminal hole 231a and is formed at one side thereof with an electrolyte injection hole 231b through which the electrolyte is injected into the case 210. Aball 231c is inserted into the electrolyte injection hole 231b in order to seal the electrolyte injection hole 231b.

An electrode terminal 232, for instance, a negative electrode terminal is inserted into the terminal hole 231a. A tube-shaped gasket 233 is fitted around the electrode terminal 232 in order to electrically insulate the electrode terminal 232 from the cap plate 231. An insulating plate 234 is provided below the cap plate 231 and a terminal plate 235 is provided below the insulating plate 234.

The electrode terminal 232, which is surrounded by the gasket 233, is inserted into the terminal hole 231a. A lower portion of the electrode terminal 232 is electrically connected to the terminal plate 235 through the insulating plate 234.

The first electrode tap 221a extending from the first electrode plate 221 is welded to a lower surface of the cap plate 231 and a second electrode tap 222a extending from the second electrode plate 222 is welded to a lower portion of the electrode terminal 232.

Meanwhile, an insulating member 236 is provided at an upper surface of the electrode assembly 220 in order to electrically insulate the electrode assembly 220 from the cap assembly 230 while covering an upper end portion of the electrode assembly 220. The insulating member 236 is formed with an electrolyte passage hole 236b aligned corresponding to the electrolyte injection hole 231b of the cap plate 231 so as to allow the electrolyte to be introduced into the case 210. The insulating member 236 is made from polymer resin having superior insulating characteristics. Preferably, the insulating member 236 is made from polypropylene. However, the present invention does not limit the materials for the insulating case 236.

As described above, according to the square type lithium secondary battery 200 having the electrode assembly 220 of the present invention, when external impact is applied to the square type lithium secondary battery 200 due to the dropping of the square type lithium secondary battery 200, elements of the cap assembly 230 installed on the upper portion of the electrode assembly 220 may be prevented from colliding with the electrode assembly 220, so that reliability and stability of the square type lithium secondary battery 200 can be improved.

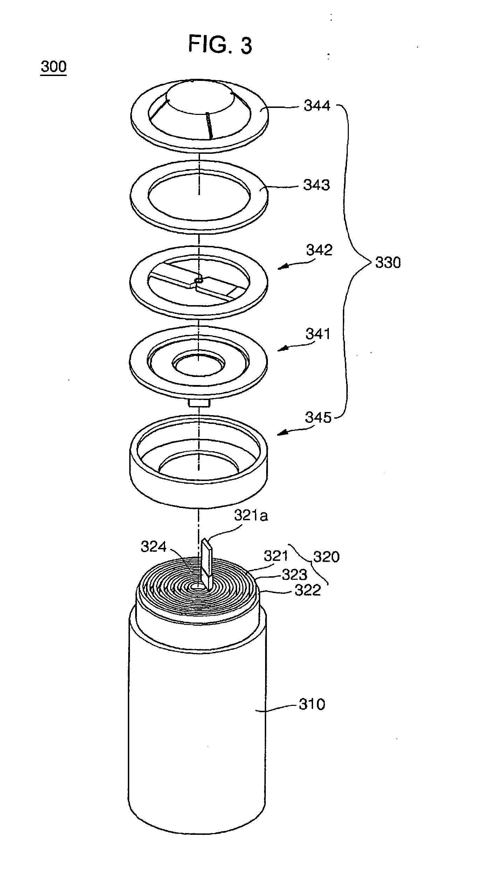

FIG. 3 is an exploded perspective view illustrating a cylinder type lithium secondary battery including the electrode assembly according to one embodiment of the present invention.

Referring to FIG. 3, the lithium secondary battery 300 according to one embodiment of the present invention includes a case 310 in the form of a cylindrical can, an electrode assembly 320, which is wound in the form of a cylinder and generates a differential voltage during charge/discharge operations, and a cap assembly 330 assembled with an upper end portion of the case 310 so as to prevent the electrode assembly 320 from being separated from the case 310.

The case 310 has a substantially cylindrical structure so as to receive the electrode assembly 320 therein. The case 310 has a cavity for receiving the electrode assembly 320 and includes a cylindrical wall having a predetermined diameter and a bottom wall formed at a bottom portion of the cylindrical wall. An upper portion of the cylindrical wall is opened so as to allow the electrode assembly 320 to be inserted into the case 310. In general, the case 310 is made from Al, Fe, or an alloy thereof.

The electrode assembly 320 includes a first electrode plate 321 coated with either a positive electrode active material or a negative electrode active material (for instance, the positive electrode active material is coated on the first electrode plate 321), a second electrode plate 322 coated with either the positive electrode active material or the negative electrode active material (for instance, the negative electrode active material is coated on the second electrode plate 322), and a separator 323 interposed between the first and second electrode plates 321 and 322 so as to prevent the short circuit from occurring between the first and second electrode plates 321 and 322 while allowing lithium ions to pass through exclusively. The first electrode plate 321, the second electrode plate 322 and the separator 323 are wound together in the form of the cylindrical structure and then accommodated in the case 310. The separator 323 protrudes in upward and downward directions from the first and second electrode plates 321 and 322 and the protruding width of the upper section of the separator 323, which protrudes upward from the first and second electrode plates 321 and 322, is different from the protruding width of the lower section of the separator 323, which protrudes downward from the first and second electrode plates 321 and 322. The protruding width of the upper section of the separator 323 may be larger than the protruding width of the lower section of the separator 323.

In addition, the first electrode plate 321 is provided with a first electrode tap 321a. In general, the first electrode tap 321a is made from aluminum and protrudes upward from the first electrode plate 321 by a predetermined length so as to serve as a positive electrode tap or a negative electrode tap. For instance, the first electrode tap 321a serves as the positive electrode tap not illustrated in figure. The second electrode plate 322 is provided with a second electrode tap. In general, the second electrode tap is made from nickel and protrudes downward from the second electrode plate 322 by a predetermined length so as to serve as a positive electrode tap or a negative electrode tap. For instance, the second electrode tap serves as the negative electrode tap. The present invention does not limit the materials for the first and second electrode taps 321a and 322a. Insulating tapes 324 are attached around predetermined portions of the first and second electrode taps 321a and 322a, which protrude from the electrode assembly 320, in order to prevent the short circuit from occurring between the first and second electrode plates 321 and 322.

The cap assembly 330 includes a conductive safety vent 341, which is deformed when overcharge or abnormal heat generation occurs and to which the first electrode tap 321 is welded, a printed circuit board (PCB) 342 electrically and mechanically connected to an upper portion of the conductive safety vent 341 in such a manner that circuits thereof are disconnected when the conductive safety vent 341 is deformed, a positive temperature coefficient (PTC) device 343 electrically and mechanically connected to an upper portion of the PCB 342 in such a manner that circuits thereof are disconnected when the temperature rises above a predetermined level, a conductive electrode cap 344 electrically and mechanically connected to an upper portion of the PTC device 343 so as to transfer the current to the exterior, and an insulating gasket 345 which receives the conductive safety vent 341, the PCB 342, the PTC device 343 and the conductive electrode cap 344 while insulating the above elements from the case 310. At this time, the conductive electrode cap 344 is bonded to one of the first electrode tap 321a and the second electrode tap. For instance, the conductive electrode cap 344 is bonded to the first electrode tap 321a, so that the conductive electrode cap 344 may serve as a positive terminal similar to the first electrode plate 321.

Although it is not illustrated in figures, an electrolyte is injected into the case 310 having the cylindrical structure so as to allow ions to move through the electrode assembly 320. The electrolyte may serve as a carrier for lithium ions, which are created from positive and negative electrodes of the secondary battery during the charge and discharge operations due to electrochemical reactions. The electrolyte includes a non-aqueous organic electrolyte, which is a mixture of a lithium salt and a high-purity organic solvent. In addition, the electrolyte may include polymer electrolyte. The material for the electrolyte is not limited to these materials.

As described above, according to the cylinder type lithium secondary battery 300 having the electrode assembly 320 of the present invention, when external impact is applied to the cylinder type lithium secondary battery 300 due to the dropping of the cylinder type lithium secondary battery 300, elements of the cap assembly 330 installed on the upper portion of the electrode assembly 320 may be prevented from colliding with the electrode assembly 320, so that reliability and stability of the cylinder type lithium secondary battery 300 can be improved.

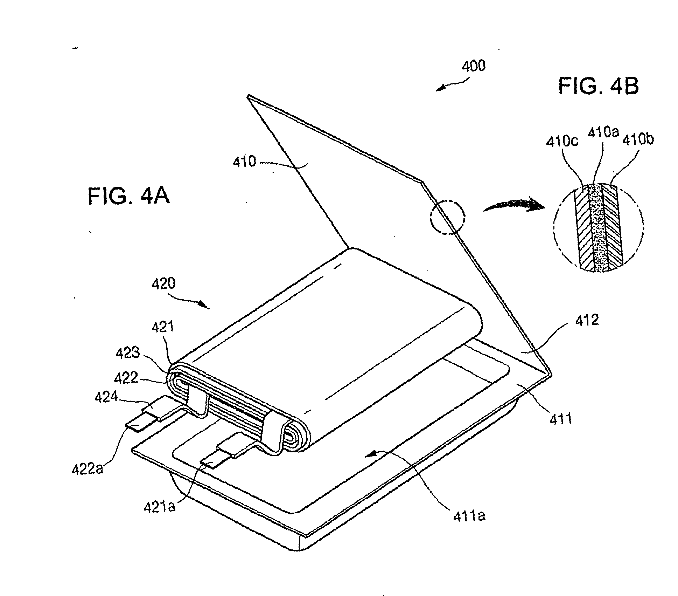

FIG. 4A is an exploded perspective view illustrating a pouch type lithium secondary battery including the electrode assembly according to one embodiment of the present invention.

Referring to FIG. 4A, the pouch type lithium secondary battery 400 according to one embodiment of the present invention includes a case 410 in the form of a pouch, and an electrode assembly 420, which is accommodated in the case 410 and generates a differential voltage during charge/discharge operations.

Referring to FIG. 4B, the case 410 includes a core section 410a made from a metal, such as aluminum, a thermal bonding layer 410b formed at an upper or outer surface of the core section 410a, and an insulating layer 410c formed at a lower or inner surface of the core section 410a. The thermal bonding layer 410b serves as an adhesive layer and is made of polymer resin, such as modified polypropylene including casted polypropylene. The insulating layer 410c is formed with resin, such as nylon or polyethyleneterephthalate (PET). However, the present invention does not limit the structure and materials of the case 410. In addition, the case 410 includes a body 411 having a cavity 411a for receiving the electrode assembly 420 and a cover 412 for covering the body 411 having the cavity 411 a. The cavity 411 a used for receiving the electrode assembly 420 is formed through a pressing process. After the electrode assembly 420 has been accommodated in the cavity 411a of the body 411, the cover 412 is placed on the body 411 and they are bonded to each other.

The electrode assembly 420 includes a first electrode plate 421 coated with either a positive electrode active material or a negative electrode active material (for instance, the positive electrode active material is coated on the first electrode plate 421), a second electrode plate 422 coated with either the positive electrode active material or the negative electrode active material (for instance, the negative electrode active material is coated on the second electrode plate 422), and a separator 423 interposed between the first and second electrode plates 421 and 422 so as to prevent the short circuit from occurring between the first and second electrode plates 421 and 422 while allowing lithium ions to pass through exclusively. The separator 423 protrudes in upward and downward directions from the first and second electrode plates 421 and 422 and the protruding width of the upper section of the separator 423, which protrudes upward from the first and second electrode plates 421 and 422, is different from the protruding width of the lower section of the separator 423, which protrudes downward from the first and second electrode plates 421 and 422. The protruding width of the upper section of the separator 423 may be larger than the protruding width of the lower section of the separator 423.

In addition, the first electrode plate 421, the second electrode plate 422 and the separator 423 are wound together in the form of a substantially cylindrical structure, and then accommodated in the case 410. The first electrode plate 421 is provided with a first electrode tap 421a. In general, the first electrode tap 421a is made from aluminum and protrudes upward from the first electrode plate 421 by a predetermined length so as to serve as a positive electrode tap or a negative electrode tap. For instance, the first electrode tap 421a serves as the positive electrode tap. The second electrode plate 422 is provided with a second electrode tap 422a. In general, the second electrode tap 422a is made from nickel and protrudes downward from the second electrode plate 422 by a predetermined length so as to serve as a positive electrode tap or a negative electrode tap. For instance, the second electrode tap 422a serves as the negative electrode tap. The materials for the first and second electrode taps 421a and 422a are not limited to the described materials. Insulating tapes 424 are attached around predetermined portions of the first and second electrode taps 421a and 422a, which protrude from the electrode assembly 420, in order to prevent the short circuit from occurring between the first and second electrode plates 421 and 422 and between the case 410 and the first and second electrode taps 421a and 422a.

Predetermined portions of the first and second electrode taps 421a and 422a extend out of the case 410 by a predetermined length after the electrode assembly 420 has been accommodated in the case 410 in the form of the pouch.

Meanwhile, although it is not illustrated in figures, the pouch type lithium secondary battery having the electrode assembly according to one embodiment of the present invention further may include a protective circuit module. The protective circuit module is employed in order to control the charge and discharge operations and malfunction of the electrode assembly 420. For instance, if an over-current is detected from the electrode assembly 420, the protective circuit module shuts off the over-current. In general, the protective circuit module has various protective circuits. In addition, the protective circuit module is electrically connected to the first and second electrode taps 421a and 422a of the electrode assembly 420.

As described above, according to the pouch type lithium secondary battery 400 having the electrode assembly 420 according to an aspect of the present invention, the case 410 can be prevented from being broken by the movement of the electrode assembly 420, even if external impact is applied to the pouch type lithium secondary battery 400 due to the dropping of the pouch type lithium secondary battery 400. In particular, according to an aspect of the present invention, the sealing state of the case 410 can be securely maintained even at positions where the first and second electrode taps 421a and 422a extend out of the case 410, so that reliability and stability of the pouch type lithium secondary battery 400 can be improved.

As described above, aspects of the present invention can provide the electrode assembly and the lithium secondary battery with the same, capable of improving reliability and stability of the lithium secondary battery by protecting the lithium secondary battery from external impact applied thereto when a user drops the lithium secondary battery onto the ground.

## Claims

1. A jelly-roll type electrode assembly (100) comprising:
a first electrode plate (110);
a second electrode plate (120); and
a separator (130) interposed between the first and second electrode plates (110, 120) so as to insulate the first electrode plate (110) from the second electrode plate (120), wherein the separator (130) includes an upper section that protrudes by an upper protruding width Lᵤₚₚₑᵣ from an upper portion of the first and second electrode plates (110, 120) and a lower section that protrudes by a lower protruding width L_{lower} from a lower portion of the first and second electrode plates (110, 120) **characterized in that** the upper protruding width Lᵤₚₚₑᵣ of the separator (130) is greater than the lower protruding width L_{lower} of the separator (130).

2. The jelly-roll type electrode assembly as claimed in claim 1, wherein the upper protruding width Lᵤₚₚₑᵣ of the separator (130) is in a range of 2 to 4% with respect to a total width (W) of the separator (130).

3. The jelly-roll type electrode assembly as claimed in claim 2, wherein the upper protruding width Lᵤₚₚₑᵣ of the separator (130) is 1.3 to 2 times larger than the lower protruding width L_{lower} of the separator (130).

4. The jelly-roll type electrode assembly as claimed in claim 2, wherein the lower protruding width L_{lower} of the separator (130) is in a range of 2 to 3% with respect to a total width (W) of the separator (130).

5. The jelly-roll type electrode assembly as claimed in claim 1, wherein the upper protruding width Lᵤₚₚₑᵣ of the separator (130) is greater than the lower protruding width L_{lower} of the separator (130) by 0.3 to 1.0mm.

6. The jelly-roll type electrode assembly as claimed in claim 1, wherein the upper protruding width Lᵤₚₚₑᵣ of the separator (130) is in a range of 1.0 to 2.0mm.

7. The jelly-roll type electrode assembly as claimed in claim 1, wherein the lower protruding width L_{lower} of the separator (130) is in a range of 1.0 to 2.0mm.

8. The jelly-roll type electrode assembly according to any of the preceding claims, further comprising:
a first electrode tap (115), which is attached to the first electrode plate (110) and protrudes therefrom by a predetermined length, and
a second electrode tap (125), which is attached to the second electrode plate (120) and protrudes therefrom by a predetermined length;
wherein an insulation tape (140) is attached around predetermined portions of the first and second electrode taps (115, 125) so as to prevent a short circuit from occurring between the first and second electrode plates (110, 120).

9. A secondary battery comprising:
a jelly-roll type electrode assembly (100) according to any of the claims 1 to 8; and
a case that receives the electrode assembly therein.

10. The secondary battery as claimed in claim 9, wherein the case is selected from the group consisting of a cylinder type case, a square type case and a pouch type case.

## Patentansprüche

1. Gewickelte Elektrodenvorrichtung (100), aufweisend:
eine erste Elektrodenplatte (110);
eine zweite Elektrodenplatte (120); und
einen Separator (130), der zwischen der ersten und zweiten Elektrodenplatte (110, 120) angeordnet ist, so dass die erste Elektrodenplatte (110) gegenüber der zweiten Elektrodenplatte (120) isoliert ist, wobei der Separator (130) einen oberen Abschnitt, der um eine obere vorragende Breite Lᵤₚₚₑᵣ über einen oberen Bereich der ersten und zweiten Elektrodenplatte (110, 120) hinausragt, sowie einen unteren Abschnitt, der um eine untere vorragende Breite L_{lower} über einen unteren Bereich der ersten und zweiten Elektrodenplatte (110, 120) hinausragt, aufweist, **dadurch gekennzeichnet, dass** die obere vorragende Breite Lᵤₚₚₑᵣ des Separators (130) größer als die untere vorragende Breite L_{lower} des Separators (130) ist.

2. Gewickelte Elektrodenvorrichtung nach Anspruch 1, wobei die obere vorragende Breite Lᵤₚₚₑᵣ des Separators (130) bezüglich einer Gesamtbreite (W) des Separators (130) im Bereich von 2 bis 4% liegt.

3. Gewickelte Elektrodenvorrichtung nach Anspruch 2, wobei die obere vorragende Breite Lᵤₚₚₑᵣ des Separators (130) um das 1,3- bis 2-fache größer als die untere vorragende Breite L_{lower} des Separators (130) ist.

4. Gewickelte Elektrodenvorrichtung nach Anspruch 2, wobei die untere vorragende Breite L_{lower} des Separators (130) bezüglich einer Gesamtbreite (W) des Separators (130) im Bereich von 2 bis 3% liegt.

5. Gewickelte Elektrodenvorrichtung nach Anspruch 1, wobei die obere vorragende Breite Lᵤₚₚₑᵣ des Separators (130) um 0,3 bis 1,0mm größer als die untere vorragende Breite L_{lower} des Separators (130) ist.

6. Gewickelte Elektrodenvorrichtung nach Anspruch 1, wobei die obere vorragende Breite Lᵤₚₚₑᵣ des Separators (130) im Bereich von 1,0 bis 2,0mm liegt.

7. Gewickelte Elektrodenvorrichtung nach Anspruch 1, wobei die untere vorragende Breite L_{lower} des Separators (130) im Bereich von 1,0 bis 2,0mm liegt.

8. Gewickelte Elektrodenvorrichtung nach einem der vorhergehenden Ansprüche, weiterhin aufweisend:
einen ersten Elektrodenabgriff (115), der an der ersten Elektrodenplatte (110) befestigt ist und um eine vorbestimmte Länge über diese hinausragt;
einen zweiten Eiektrodenabgriff(125), der an der zweiten Elektrodenplatte (120) befestigt ist und um eine vorbestimmte Länge über diese hinausragt;
wobei ein Isolierband (140) um vorbestimmte Bereiche des ersten und zweiten Elektrodenabgriffs (115, 125) herum befestigt ist, so dass das Auftreten eines Kurzschlusses zwischen der ersten und zweiten Elektrodenplatte (110, 120) verhindert wird.

9. Sekundärbatterie, aufweisend:
eine gewickelte Elektrodenvorrichtung (100) nach einem der Ansprüche 1 bis 8; und ein Gehäuse, welches die Elektrodenvorrichtung in sich aufnimmt.

10. Sekundärbatterie nach Anspruch 9, wobei das Gehäuse aus der Gruppe bestehend aus einem Zylindergehäuse, einem quadratischen Gehäuse und einem beutelartigen Gehäuse ausgewählt ist.

## Revendications

1. Assemblage d'électrodes (100) de type enroulé comportant :
une première plaque d'électrode (110) ;
une seconde plaque d'électrode (120) ; et
un séparateur (130) interposé entre les première et seconde plaques d'électrodes (110, 120) afin d'isoler la première plaque d'électrode (110) de la seconde plaque d'électrode (120), dans lequel le séparateur (130) comprend une section supérieure qui fait saillie d'une largeur saillante supérieure Lᵤₚₚₑᵣ d'une partie supérieure des première et seconde plaques d'électrodes (110, 120), et une section inférieure qui fait saillie d'une largeur saillante inférieure L_{lower} d'une partie inférieure des première et seconde plaques d'électrodes (110, 120), **caractérisé en ce que** la largeur saillante supérieure Lᵤₚₚₑᵣ du séparateur (130) est plus grande que la largeur saillante inférieure L_{lower} du séparateur (130).

2. Assemblage d'électrodes de type enroulé selon la revendication 1, dans lequel la largeur saillante supérieure Lᵤₚₚₑᵣ du séparateur (130) est comprise dans une plage de 2 à 4 % par rapport à une largeur totale (W) du séparateur (130).

3. Assemblage d'électrodes de type enroulé selon la revendication 2, dans lequel la largeur saillante Lᵤₚₚₑᵣ du séparateur (130) est de 1,3 à 2 fois supérieure à la largeur saillante inférieure L_{lower} du séparateur (130).

4. Assemblage d'électrodes de type enroulé selon la revendication 2, dans lequel la largeur saillante inférieure L_{lower} du séparateur (130) est comprise dans une plage de 2 à 3 % par rapport à une largeur totale (W) du séparateur (130).

5. Assemblage d'électrodes de type enroulé selon la revendication 1, dans lequel la largeur saillante supérieure Lᵤₚₚₑᵣ du séparateur (130) est supérieure de 0,3 à 1,0 mm à la largeur saillante inférieure L_{lower} du séparateur (130).

6. Assemblage d'électrodes de type enroulé selon la revendication 1, dans lequel la largeur saillante supérieure Lᵤₚₚₑᵣ du séparateur (130) est comprise dans une plage de 1,0 à 2,0 mm.

7. Assemblage d'électrodes de type enroulé selon la revendication 1, dans lequel la largeur saillante inférieure L_{lower} du séparateur (130) est comprise dans une plage de 1,0 à 2,0 mm.

8. Assemblage d'électrodes de type enroulé selon l'une quelconque des revendications précédentes, comportant en outre :
une première prise d'électrode (115), qui est attachée à la première plaque d'électrode (110) et en fait saillie sur une longueur prédéterminée, et
une seconde prise d'électrode (125), qui est attachée à la seconde plaque d'électrode (120) et en fait saillie sur une longueur prédéterminée ;
dans lequel un ruban isolant (140) est attaché autour de parties prédéterminées des première et seconde prises d'électrodes (115, 125) afin d'empêcher un court-circuit de se produire entre les première et seconde plaques d'électrodes (110, 120).

9. Pile secondaire comportant :
un assemblage d'électrodes (100) de type enroulé selon l'une quelconque des revendications 1 à 8 ; et
un boîtier qui reçoit en lui l'assemblage d'électrodes.

10. Pile secondaire selon la revendication 9, dans laquelle le boîtier est choisi dans le groupe consistant en un boîtier de type cylindrique, un boîtier de type carré et un boîtier de type poche.
